# EUROPEAN PATENT SPECIFICATION

(11) **EP 1 805 329 B1**
(45) Date of publication and mention of the grant of the patent: **24.09.2008**
(21) Application number: 05776564.6
(22) Date of filing: 05.09.2005
(51) Int. Cl.: C21B 3/04, C22B 7/00, C22B 7/04

(54) **METHOD AND DEVICE FOR RECOVERING STAINLESS STEEL FROM STEEL SLAGS UNDER DRY CONDITIONS**
VERFAHREN ZUR RÜCKGEWINNUNG VON NICHTROSTENDEM STAHL AUS STAHLSCHLACKEN UNTER TROCKENEN BEDINGUNGEN
PROCEDE ET DISPOSITIF DE RECUPERATION D'ACIER INOXYDABLE A PARTIR DE RESIDU D'ACIER DANS DES CONDITIONS SECHES

(30) Priority: 03.09.2004 NL 1026956
(43) Date of publication of application: 11.07.2007
(73) Proprietor: Recco B.V., 2111 BT Aerdenhout (NL); Reukema Non Ferro Scheiding B.V., 3846 BV Harderwijk (NL); Separation system Engineering GmbH, 21717 Wedel (DE)
(72) Inventor: HOOIVELD, Jan, 8241 AA LELYSTAD (NL); GROOTHOFF, Jan, Andreas, 2111 BT AERDENHOUT (NL); VAN LOOY, Eric, 08700 IGUALADA BARCELONA (ES)
(86) International application number: PCT/NL2005/000640
(87) International publication number: WO 2006/041281

(56) References cited:
- EP-A- 1 312 415
- WO-A-02/50521
- DE-A1- 3 644 403
- FR-A- 2 666 098
- US-A- 3 885 744
- MESINA MARIAN B ET AL: "Improvements in separation of non-ferrous scrap metals using an electromagnetic sensor" PHYS. SEP. SCI. ENG.; PHYSICAL SEPARATION IN SCIENCE AND ENGINEERING JUNE 2003, vol. 12, no. 2, June 2003 (2003-06), pages 87-101, XP008046807

## Description

The invention relates to a method and a device for recovering stainless steel under dry conditions from a waste stream of slags formed in the production of stainless steel in a stainless steel factory.

Large waste streams of steel slags are formed in the production of stainless steel. In 1 ton of stainless steel production 30-40% may be steel slag. Scrap pieces which still contain stainless steel are present in the waste stream. It is known to treat the waste stream by a defined recovery process in order to recover as much stainless steel as possible from it. This known recovery process starts with removing pieces larger than 250 mm from the waste stream. The remainder of the waste stream is then crushed, and stainless steel-containing scrap pieces of 50/80-250 mm are sorted out by hand. The remaining part of the waste stream is then milled under wet conditions in two steps, with water being supplied, in order to release small included pieces of stainless steel from these slags. The first milling device is in this case a rod mill, the discharge from which is screened to 10-50 mm and 4-10 mm subfractions. These subfractions are discharged as stainless steel concentrates. The fraction smaller than 4 mm is pumped into and dewatered in a spiral separator before then being fed to the second milling device. The second milling device is in this case a ball mill which operates under wet conditions for final fine-milling of this ultrafine fraction. The discharge from the second milling device is treated on a spiral separator in which the largest pieces are discharged as stainless steel concentrate. The overflow from the spiral separator is purified in a cyclone prior to treatment on a screen elbow separator for recovering fine stainless steel pieces (1-4 mm). The remainder of the waste stream (slurry) is treated in specially sealed settling tanks, in which the excess water is reused for the abovementioned wet milling and screening process.

Although this process has a high degree of recovery and a good quality of wet recovered scrap pieces, it is disadvantageous since it requires high investment, consumes a large amount of energy and the waste stream which remains at the end generally cannot be reused and has instead to be landfilled.

FR 2 666 098 discloses a plant for recovering raw materials from special steel slag. The plant is used to produce slag that can be employed as a fertilizer for agriculture, with a particle of 0-4 mm. The plant performs a density separation of the initial slag, based on a selective classification of this slag by means of screens and pneumatic tables, which are suitable arranged.

It is an object of the present invention to at least partially overcome the abovementioned drawbacks and/or to create a usable alternative.

This object is achieved by a method according to claim 1. The method comprises the steps of crushing at least part of a waste stream of slags under substantially dry conditions in a primary crushing circuit to form a primary crushed fraction of waste pieces with stainless steel-containing scrap pieces released from the slags, and then screening the primary crushed fraction to form at least a primary coarse and fine subfraction. Then, stainless steel-containing scrap pieces are recovered from the primary coarse subfraction with the aid of a sensor separator. The sensor separator in this case measures attenuation of inductances of the waste pieces guided past it, and actuates blowing nozzles as a function of the measured value so as to blow relevant stainless steel-containing scrap pieces out of the primary coarse subfraction guided past the sensor separator. Then, the waste pieces which remain after the sensor separation are fed to a magnetic separator, in particular a neodymium magnetic separator, for further recovery of magnetic stainless steel-containing slag pieces. These magnetic stainless steel-containing slag pieces which have been recovered by the magnetic separator are then returned to a crushing circuit, in particular the abovementioned primary crushing circuit, in order for stainless steel-containing scrap pieces to be released from the slags again. This method can give savings of approximately 30% in the further unnecessary treatment of clean slag, i.e. slag which does not contain any stainless steel-containing scrap pieces, and provides a better slag product for reuse. The addition of the treatment with the magnetic separator at this point in the method advantageously ensures that the efficiency of the system is considerably improved. The sensor separator is then able to take the pure stainless steel out of the waste stream, while the magnetic separator ensures that only slag pieces which contain stainless steel are fed to a crushing circuit or a screen positioned downstream. The remainder of the waste stream is formed by slags for reuse. This creates a substantially dry recovery process which can make use of crushing techniques without any water having to be supplied, in order to release stainless steel parts so that they can then be separated off by means of sensor separation. The quality of the stainless steel scrap recovered in this way is equal to or even greater than that achieved in the prior art, while the capital investment costs required for installing a device for carrying out a method of this type are considerably lower. The energy consumption of the method is advantageously low, and a device for carrying out the method can advantageously be of compact construction, and correspondingly can advantageously be delivered in a fixed form or a semi-mobile variant, as desired.

In one particular embodiment, prior to treatment of the primary coarse subfraction with the sensor separator, the method also comprises the step of recovering magnetic stainless steel-containing scrap pieces therefrom with the aid of a magnetic separator. The magnetic separator is then used to remove the ferritic stainless steel-containing scrap pieces, while the sensor separator is used to remove the austenitic stainless steel-containing scrap pieces. This can considerably improve the efficiency of the sensor separation and advantageously relieves the load on the neodymium magnetic separator.

Preferred embodiments are defined in the subclaims.

The invention also relates to a device according to one of claims 20-23, and to the use of a device of this type according to claim 24.

The invention will be explained in more detail on the basis of the appended drawing, in which:
Fig. 1 shows a flow diagram of a possible embodiment of the method and device comprising four sections; and
Fig. 2 shows a variant of Fig. 1.

### Section 1: Preliminary separation + treatment with FeSO₄

A base waste stream of slags (1) derived from the production of stainless steel is mixed with a certain percentage of FeSO₄ (7), for example a few percent, and separated via a grate (2) into a coarse base fraction, for example +250 mm, and a fine base fraction -250 mm. The fine base fraction is then separated in a screen (8), for example a rod screen or star screen, into a. plurality of subfractions, for example a subfraction 80-250 mm, a subfraction 10-80 mm and a subfraction 0-10 mm. Stainless steel-containing scrap pieces (5) are then visually removed from the coarse base fraction (3), for example with the aid of a hydraulic crane with grab (4). The clean coarse base fraction (6) can subsequently be crushed by means of a crusher, for example formed by the same crane, but now with an additional auxiliary tool, such as a jaw crusher, to form a fine base fraction, for example 0-250 mm, and returned to the base waste stream.

One of the subfractions screened out is deferrized in the usual way by means of a magnetic separator (14), in particular a drum magnet, releasing magnetic stainless steel-containing scrap pieces (15). The nonmagnetic stainless steel-containing scrap pieces (17) are recovered via a sensor or manual sorting (16).

If economically viable, it is also possible for a magnetic separator (9), for example a drum magnet, and/or a magnetic separator with neodymium magnet (11) to be positioned on the finest subfraction which is screened out, in order to remove the stainless steel-containing scrap pieces (10 and 12) which are present from it, which scrap pieces are then all returned to section 2, described below.

The optionally deferrized ultrafine subfraction (13) which has been screened out in this way is discharged as end product. The subfraction which had only been screened and the subfraction from which some of the stainless steel-containing scrap pieces had already been removed are returned to section 2 for further processing.

The treatment with FeSO₄ (7) is carried out in order to convert free Cr⁶⁺ pieces in the waste stream into Cr³⁺, which are nontoxic. The intensive treatment of the slag by screening and transfer via various conveyor members, together with the moisture content which is already present in the base waste stream of slags (1), ensure that all the Cr⁶⁺ is converted into Cr³⁺, in accordance with the formula: 2Cr⁶⁺ + 6FeSO₄ = 2Cr³⁺ + 3Fe₂(SO₄)₃. This treatment allows the ultrafine subfraction (13) to be used further according to current environmental rules, for example to be released as a construction material.

### Section 2: Primary crushing circuit

The subfractions originating from section 1 are in section 2 supplied to a primary crushing circuit (18), in particular an impact crusher (rotary crusher) or a cone crusher or a jaw crusher. The subfractions are crushed therein under substantially dry conditions, i.e. without further moisture being supplied. The primary crushed fraction formed in this way is then screened in a screen (19), for example a rod screen or linear-eccentric screen, to form a primary coarse subfraction, for example +30 mm, and a primary fine subfraction, for example -30 mm. The primary coarse subfraction is deferrized by means of a magnetic separator (20), in particular a drum magnet, and provides magnetic stainless steel-containing scrap pieces (21). The nonmagnetic fraction is passed through to a sensor separator (22) for obtaining austenitic stainless steel-containing scrap pieces (23). The slag fraction which remains passes through to a neodymium magnetic separator (22a) for recovering slags containing magnetic stainless steel-containing slag pieces, which are then returned to the primary crushing circuit (18) for further release of these included stainless steel-containing scrap pieces in the slags. The slag fraction which is not returned to the primary crushing circuit (18) is discharged as slag end product (22b).

### Section 3: Secondary crushing circuit

The primary fine subfraction which remains in section 2 is passed to a secondary crushing circuit (24), for example a hammer mill, horizontal impactor or vertical shaft impactor, or cone crusher, for further comminution and release of stainless steel-containing scrap pieces from the slag. The fraction is there in turn crushed under substantially dry conditions. The secondary crushed fraction of waste pieces formed in this way is separated by means of a screen (25) into a plurality of subfractions, for example 10-30 mm, 5-10 mm, 1-5 mm and 0-1 mm. The coarsest subfraction of these successively passes via a magnetic separator (26), for example a drum magnet, for obtaining magnetic stainless steel-containing scrap pieces (27), and a sensor separator (28) for obtaining austenitic stainless steel-containing scrap pieces (29). The remaining slag fraction is passed to a neodymium magnetic separator (28a) for recovering slags containing magnetic stainless steel-containing slag pieces which are then returned to the secondary crushing circuit (24) for further release of these included stainless steel-containing scrap pieces in the slags. The slag fraction which is not returned to the secondary crushing circuit is discharged as slag end product (28b).

The second-coarsest subfraction of the above likewise passes via a magnetic separator (30), for example a drum magnet, for obtaining magnetic stainless steel-containing scrap pieces (31), and a sensor separator (32) for obtaining austenitic stainless steel-containing scrap pieces (33). The remaining slag fraction is returned to the secondary crushing circuit (24) for further release of included stainless steel-containing scrap pieces in the slag. If desired, the sensor separator may in this case also be followed by a separation using a neodymium magnetic separator in order to efficiently reduce the return flow to the crushing circuit.

### Section 4: Dry milling (milling circuit)

The second-finest screened subfraction in the screen (25) from section 3 is passed to a magnetic separator (35), in particular a barium ferrite drum magnet, for obtaining magnetic stainless steel-containing scrap pieces (36), the slag fraction is passed to a second magnetic separator (37), in particular a neodymium magnet, for obtaining slightly magnetic stainless steel-containing scrap pieces. The remaining slag fraction (38) is returned to the base waste stream (1) for admixing with FeSO₄, and is ultimately included in the screened-out finest subfraction (13) from section 1. This removal of the "clean" slag (slag which does not contain stainless steel) before it enters a milling circuit (39) saves 20-30% on the milling capacity required.

The magnetic fraction (36) and the slightly magnetic fraction (37) are together passed to the milling circuit (39), in particular a double vibrating tube mill with rods or eccentric oscillating mill or vertical shaft impactor, which mills the material. In the process, after a certain residence time, for example of a few minutes, the slag will have been milled into dust and after screening in a screen (40), in particular a double-decker screen (sizer), to for example 1 mm, the coarser fraction (1-5 mm) remains as "clean" stainless steel-containing scrap pieces (41). Practical tests have demonstrated that it is in this way possible to achieve a purity of more than 90%. The finest screened residual fraction (42) is combined with the finest subtraction (34) which previously remained from section 3, after which the two slag streams are returned to the base waste stream of slags (1) for admixing with FeOS₄.

To summarize, the method provides the following products:
- stainless steel-containing scrap pieces +250 mm (5);
- stainless steel-containing scrap pieces 80-250 mm (15, 17);
- stainless steel-containing scrap pieces 30-80 mm (21, 23);
- stainless steel-containing scrap pieces 10-30 mm (27, 29);
- stainless steel-containing scrap pieces 5-10 mm (31, 33);
- stainless steel-containing scrap pieces 1-5 mm (41);
- slag end product 0-10 mm (13);
- slag end product 30-80 mm (22b); and
- slag end product 10-30 mm (28b).

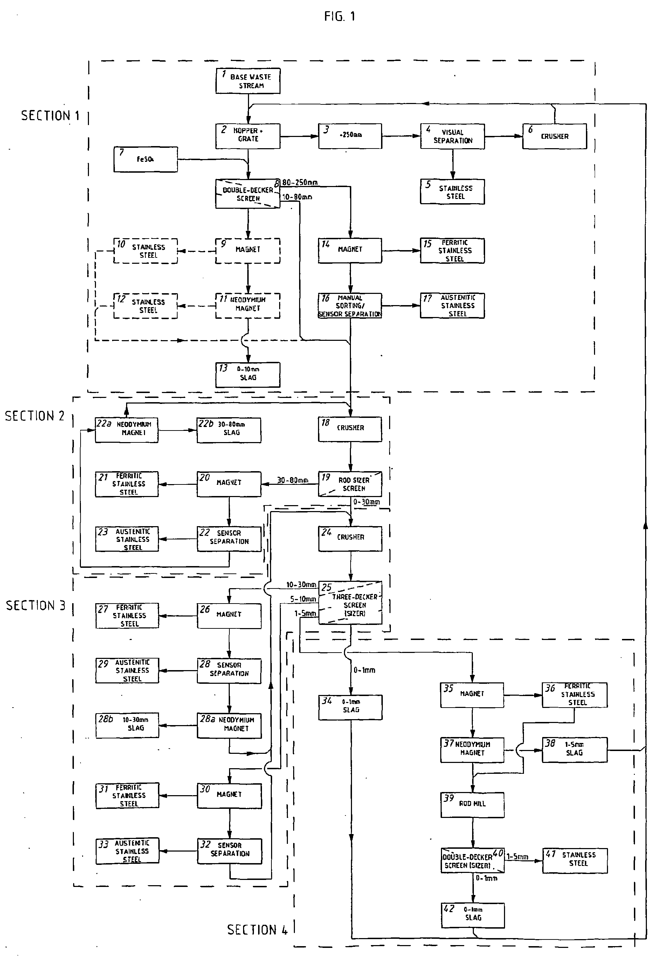

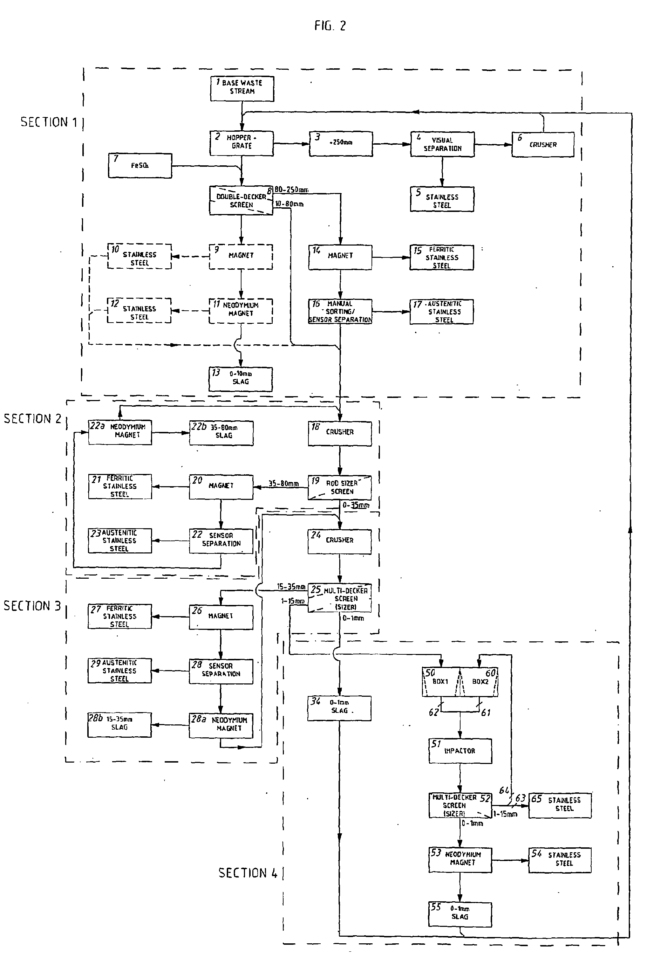

Fig. 2 shows a variant embodiment of Fig. 1, in which the same components are denoted by the same reference numerals. In addition to the fact that the various screens are now set to different screen sizes, the major changes lie in particular in section 3 and 4. For example, a two-decker screen (25) is now used in section 3, while the magnetic separator (30) and sensor separator (32) have been dispensed with.

In section 4, the second-finest screened subfraction from screen (25) from section 3 is passed to a first hopper (50). From this first hopper, this first subfraction passes to a milling circuit (51), which is in this case formed by an impactor, in particular what is known as a vertical shaft impactor, which mills the material. It then passes into a screen (52) which screens it, for example, to 1 mm. The finest screened residual fraction is guided past a magnetic separator (53), in particular a neodymium magnetic separator. This magnetic separator (52) is, for example, arranged above a vibrating trough, along which the finest screened residual fraction is passed. The magnetic separator (52) ensures that stainless steel-containing scrap pieces (54) are removed from it. The remaining part is slag (55) which is combined with the finest subfraction (34) which remained from section 3, after which the two slag streams can be returned to the base waste stream of slags (1).

Section 4 also includes a second hopper (60) which, like the first hopper (50), is connected to the milling circuit (51). In this case, switchable valves (61, 62) are provided for alternately feeding the milling circuit (51) from the first hopper (50) and the second hopper (60). The second hopper (60) is in this case fed by the coarser fraction (1-15 mm) which was screened out by the screen (52) in the first instance. In this context, the term "in the first instance" is to be understood as meaning the situation in which the milling circuit (51) and therefore also the screen (52) are fed from the first hopper (50). If the first hopper (50) is disconnected after a certain time and the milling circuit (51) is fed from the second hopper (60), this fraction will be milled again and screened in a screen (52), for example to 1 mm. The finest fraction is then still guided past the magnetic separator (53). The coarser fraction (1-15 mm) is then, as a result of suitable switching of the controllable valves (63, 64), discharged as "clean" stainless steel-containing scrap pieces (65). This process of double milling has been found to considerably improve the results, i.e. the purity of the stainless steel-containing scrap pieces (65), satisfying the quality requirement that the abovementioned purity be greater than 95%.

Numerous variants are possible in addition to the embodiment shown. For example, the sections can also be used on their own or in other combinations, and it is possible to use other types of crushing devices and screening techniques. The coarsenesses to which the crushers crush and the screens screen can be adapted as desired. The sensor separators are preferably set in such a manner that they only recover pure stainless steel. It is possible to use various types of magnetic separators and sensor separators. The various part-streams which are formed after magnetic separation, sensor separation and/or screening can as desired be discharged directly or temporarily stored and/or returned to any point of the process in order to pass through a number of the substeps of the method again. The pretreatment of the waste stream in section 1 can also take place in another manner and/or be completely or partially eliminated. The same applies to the aftertreatment of the secondary fine subfraction in section 4. In section 3, it is also possible for more or fewer subfractions to be treated together by the magnetic separator and the sensor separator in succession. The addition of the FeSO₄ may also be omitted or take place elsewhere in the process.

Therefore, the invention provides an environmentally friendly recovery process with a high efficiency, allowing advantageous use to be made of crushing, screening and/or milling techniques which are known per se, and also allowing the use of magnetic separators and sensor separators which are known per se. It is a completely dry recovery technique for removing stainless steel-containing scrap pieces with a high purity from the waste stream of steel slag from a stainless steel factory.

## Claims

1. A method for recovering stainless steel from a waste stream of slags (1) which is formed during the production of stainless steel, comprising the steps of:
- crushing at least part of the waste stream of slags under substantially dry conditions in a primary crushing circuit (18) to form a primary crushed fraction of waste pieces comprising stainless steel-containing scrap pieces which have been released from the slags;
- screening (19) the primary crushed fraction to produce at least a primary first (coarse) and second (fine) subfraction; and
- recovering scrap pieces from the primary first (coarse) subfraction with the aid of a separator;
**characterised in that** stainless steel-containing scrap pieces are recovered from the primary first (coarse) subfraction with the aid of a sensor separator (22), in which the sensor separator (22) measures attenuation of inductances of the waste pieces guided past it, and the sensor separator (22) actuating blowing nozzles as a function of the measured attenuation of inductance in order to blow austenitic stainless steel-containing scrap pieces out of the primary first (coarse) subfraction guided past the sensor separator (22),
the method further comprising the steps:
- feeding the waste pieces of the primary first (coarse) subtraction which remain after sensor separation to a magnetic separator for recovering magnetic stainless steel-containing slag pieces; and
- returning the magnetic stainless steel-containing slag pieces recovered by the magnetic separator (22a) to a crushing circuit, in order for stainless steel-containing scrap pieces to be released again from these slag pieces.

2. Method according to claim 1, in which the waste pieces of the primary first (coarse) subfraction which remain after sensor separation are fed to a neodymium magnetic separator (22a), for recovering magnetic stainless steel-containing slag pieces.

3. Method according one of the preceding claims, in which the magnetic stainless steel-containing slag pieces recovered by the magnetic separator (22a) are returned to the primary crushing circuit (18), in order for stainless steel-containing scrap pieces to be released again from these slag pieces.

4. Method according to one of the preceding claims , in which prior to treatment of the primary first (coarse) subfraction with the sensor separator (22), magnetic stainless steel-containing scrap parts are recovered therefrom with the aid of a magnetic separator (20).

5. Method according to one of the preceding claims, also comprising the steps of:
- crushing the primary second (fine) subfraction under substantially dry conditions in a secondary crushing circuit (24) to form a secondary crushed fraction of waste pieces comprising stainless steel-containing scrap pieces which have been released from the slags;
- screening (25) the secondary crushed fraction to form at least a secondary first (coarse) and second (fine) subfraction;
- recovering stainless steel-containing scrap pieces from the secondary first (coarse) subfraction with the aid of a second sensor separator (28).

6. Method according to claim 5, in which prior to the treatment of the secondary first (coarse) subfraction using the second sensor separator (28), magnetic stainless steel-containing scrap pieces are recovered therefrom with the aid of a second magnetic separator (26).

7. Method according to claim 5 or 6, also comprising the steps of:
- feeding the waste pieces of the secondary first (coarse) subfraction which remain after the sensor separation using the second sensor separator (28) to a second neodymium magnetic separator (22a) for recovering magnetic stainless steel-containing slag pieces; and
- returning the magnetic stainless steel-containing slag pieces recovered by the second neodymium magnetic separator (22a) to the secondary crushing circuit (24) in order for stainless steel-containing scrap pieces to be released again from these slag pieces.

8. Method according to one of the preceding claims, also comprising steps for the aftertreatment (section 4) of the second (fine) subfraction, namely:
- recovering magnetic stainless steel-containing scrap pieces from the second (fine) subfraction with the aid of at least one magnetic separator, ;
- fine-milling these magnetic stainless steel-containing waste pieces under substantially dry conditions in a milling circuit (39) to form a milled fraction;
- screening (40) the milled fraction to form at least a first (coarse) and second (fine) milled subfraction.

9. Method according to claim 8, in which magnetic stainless steel-containing scrap pieces from the second (fine) subfraction are recovered with the aid of at least one neodymium magnetic separator (37).

10. Method according to claim 8 or 9, in which the second (fine) milled subfraction is returned to and mixed with the waste stream of slags prior to at least part of it being fed to the primary crushing circuit (18).

11. Method according to one of claims 8-10, in which that part of the secondary second (fine) subfraction which remains after magnetic separation is returned to and mixed with the waste stream of slags prior to at least part of it being fed to the primary crushing circuit (18).

12. Method according to one of the preceding claims, also comprising steps for the pretreatment (section 1) of the waste stream, namely:
- screening (8) the waste stream of slags to form a plurality of subfractions;
- feeding at least one .of the subfractions to the primary crushing circuit (18).

13. Method according to claim 12, in which prior to the subfraction being fed to the primary crushing circuit (18), magnetic stainless steel-containing scrap pieces are recovered from it with the aid of a magnetic separator (9, 14).

14. Method according to claim 12 or 13, in which prior to the subfraction being fed to the primary crushing circuit (18), austenitic stainless steel-containing scrap pieces are recovered from it manually or with the aid of a sensor separator (16).

15. Method according to one of the preceding claims, in which the waste stream of slags is mixed with FeSO₄ (7).

16. Method according to one of the preceding claims, also comprising steps for the aftertreatment (section 4) of the second (fine) subfraction, namely:
- fine-milling the second (fine) subfraction under substantially dry conditions in a milling circuit (51) to form a milled fraction;
- screening (52) the milled fraction to form at least a first (coarse) and second (fine) milled subfraction;
- recovering magnetic stainless steel-containing waste pieces (54) from the second (fine) milled subfraction with the aid of a magnetic separator.

17. Method according to claim 16, in which magnetic stainless steel-containing waste pieces (54) are recovered from the second (fine) milled subfraction with the aid of a neodymium magnetic separator (53).

18. Method according to claim 16 or 17, in which the first (coarse) milled subfraction is returned to the milling circuit.

19. Method according to claim 18, in which the second (fine) subfraction (50) and the first (coarse) milled subfraction (60) are fed alternately to the milling circuit (51), and in which only if the milling circuit (51) is being fed with the first (coarse) milled subfraction (60), is the first (coarse) milled subfraction which is then screened out discharged as stainless steel-containing waste pieces (65).

20. Device for carrying out the method according to one of the preceding claims, comprising:
- a feed for supplying a waste stream of slags (1) formed in the production of stainless steel;
- a primary crushing circuit (18) for crushing at least part of the waste stream of slags under substantially dry conditions to form a primary crushed fraction of waste pieces with stainless steel-containing scrap pieces released from the slags;
- a screen (19) for screening the primary crushed fraction to form at least a primary first (coarse) and second (fine) subfraction; and
- a separator for recovering scrap pieces from the primary first (coarse) subfraction;
**characterised in that** the separator is a sensor separator (22) for recovering stainless steel-containing scrap pieces from the primary first (coarse) subfraction, comprising sensors for measuring attenuation of inductances of waste pieces guided past them, and blowing nozzles which can be actuated as a function of the attenuation of inductance measured by the sensors so as to blow austenitic stainless steel-containing scrap pieces out of the primary first (coarse) subfraction guided past the sensor separator;
- a neodymium magnetic separator (22a) for recovering magnetic stainless steel-containing slag pieces from the waste pieces of the primary first (coarse) subfraction which remain after sensor separation; and
- a return from the neodymium magnetic separator (22a) to the primary crushing circuit (18) for releasing stainless steel-containing scrap pieces from the magnetic stainless steel-containing slag pieces again.

21. Device according to claim 20, comprising a magnetic separator (20) for recovering magnetic stainless steel-containing scrap pieces from the primary first (coarse) subfraction prior to treatment of the latter by the sensor separator (22).

22. Device according to either of claims 20-21, also comprising a secondary crushing circuit (24).

23. Device according to one of claims 20-22, also comprising a milling circuit (39).

24. Use of the device according to one of the preceding claims for recovering stainless steel from a waste stream of slags (1) formed in the production of stainless steel in a stainless steel factory.

## Patentansprüche

1. Verfahren zur Rückgewinnung von Edelstahl aus einem Abfallstrom aus Schlacken (1), der während der Herstellung von Edelstahl gebildet wird, mit den folgenden Schritten:
- Zerkleinern mindestens eines Teils des Abfallstroms aus Schlacken unter im Wesentlichen trockenen Bedingungen in einem primären Zerkleinerungskreislauf (18) zum Bilden eines primären zerkleinerten Anteils aus Abfallstücken, welcher Edelstahl enthaltende Wertstoffstücke enthält, die aus den Schlacken herausgelöst wurden;
- Sieben (19) des primären zerkleinerten Anteils zum Herstellen mindestens eines primären ersten (groben) und eines zweiten (feinen) Unteranteils; und
- Rückgewinnen von Wertstoffstücken aus dem primären ersten (groben) Unteranteil mit Hilfe eines Abscheiders;
**dadurch gekennzeichnet, dass** Edelstahl enthaltende Wertstoffstücke aus dem primären ersten (groben) Unteranteil mit Hilfe eines Sensorabscheiders (22) rückgewonnen werden, bei der der Sensorabscheider (22) eine Dämpfung von Induktivitäten der an ihm vorbei geführten Abfallstücke misst, und der Sensorabscheider (22) in Abhängigkeit von der gemessenen Dämpfung der Induktivität Blasdüsen betätigt, um austenitische Edelstahl enthaltende Wertstoffstücke aus dem am Sensorabscheider (22) vorbei geführten primären ersten (groben) Unteranteil herauszublasen,
wobei das Verfahren ferner die folgenden Schritte umfasst:
- Zuführen der Abfallstücke des primären ersten (groben) Unteranteils, die nach der Sensor-Abscheidung verbleiben, zu einem Magnetabscheider, zum Rückgewinnen magnetischer Edelstahl enthaltender Schlackestücke; und
- Rückführen der magnetischen Edelstahl enthaltenden Schlackestücke, die vom Magnetabscheider (22a) rückgewonnen wurden, an einen Zerkleinerungskreislauf, damit Edelstahl enthaltende Wertstoffstücke erneut aus diesen Schlackestücken gelöst werden können.

2. Verfahren nach Anspruch 1, wobei die Abfallstücke aus dem primären ersten (groben) Unteranteil, die nach der Sensor-Abscheidung verbleiben, einem Neodym-Magnetabscheider (22a) zugeführt werden, zum Rückgewinnen magnetischer Edelstahl enthaltender Schlackestücke.

3. Verfahren nach einem der vorhergehenden Ansprüche, wobei die vom Magnetabscheider (22a) rückgewonnenen magnetischen Edelstahl enthaltenden Schlackestücke zum primären Zerkleinerungskreislauf (18) zurückgeführt werden, damit Edelstahl enthaltende Wertstoffstücke erneut aus diesen Schlackestücken gelöst werden können.

4. Verfahren nach einem der vorhergehenden Ansprüche, wobei vor der Behandlung des primären ersten (groben) Unteranteils mit dem Sensorabscheider (22), magnetische Edelstahl enthaltende Wertstoffstücke mit Hilfe eines Magnetabscheiders (20) aus diesem rückgewonnen werden.

5. Verfahren nach einem der vorhergehenden Ansprüche, ferner mit den folgenden Schritten:
- Zerkleinern des primären zweiten (feinen) Unteranteils unter im Wesentlichen trockenen Bedingungen in einem sekundären Zerkleinerungskreislauf (24) zum Bilden eines sekundären zerkleinerten Anteils aus Abfallstücken, welcher Edelstahl enthaltende Wertstoffstücke enthält, die aus den Schlacken gelöst wurden;
- Sieben (25) des sekundären zerkleinerten Anteils zum Bilden mindestens eines sekundären ersten (groben) und eines zweiten (feinen) Unteranteils;
- Rückgewinnen Edelstahl enthaltender Wertstoffstücke aus dem sekundären ersten (groben) Unteranteil mit Hilfe eines zweiten Sensorabscheiders (28).

6. Verfahren nach Anspruch 5, wobei vor der Behandlung des sekundären ersten (groben) Unteranteils unter der Verwendung des zweiten Sensorabscheiders (28) magnetische Edelstahl enthaltende Wertstoffstücke mit Hilfe eines zweiten Magnetabscheiders (26) aus diesem rückgewonnen werden.

7. Verfahren nach Anspruch 5 oder 6, ferner mit den folgenden Schritten:
- Zuführen der Abfallstücke des sekundären ersten (groben) Unteranteils, die nach der Sensor-Abscheidung unter der Verwendung des zweiten Sensorabscheiders (28) verbleiben, zu einem zweiten Neodym-Magnetabscheider (22a) zum Rückgewinnen magnetischer Edelstahl enthaltender Schlackestücke; und
- Rückführen der magnetischen Edelstahl enthaltenden Schlackestücke, die vom zweiten Neodym-Magnetscheider (22a) rückgewonnen wurden, an den sekundären Zerkleinerungskreislauf (24), damit Edelstahl enthaltende Wertstoffstücke erneut aus diesen Schlackestücken gelöst werden können.

8. Verfahren nach einem der vorhergehenden Ansprüche, ferner mit Schritten zur Nachbehandlung (Abschnitt 4) des zweiten (feinen) Unteranteils, nämlich:
- Rückgewinnen magnetischer Edelstahl enthaltender Wertstoffstücke aus dem zweiten (feinen) Unteranteil mit Hilfe mindestens eines Magnetabscheiders;
- Feinmahlen dieser magnetischen Edelstahl enthaltenden Abfallstücke unter im Wesentlichen trockenen Bedingungen in einem Mahlkreislauf (39) zum Bilden eines gemahlenen Anteils;
- Sieben (40) des gemahlenen Anteils zum Bilden mindestens eines ersten (groben) und eines zweiten (feinen) gemahlenen Unteranteils.

9. Verfahren nach Anspruch 8, wobei magnetische Edelstahl enthaltende Wertstoffstücke aus dem zweiten (feinen) Unteranteil mit Hilfe mindestens eines Neodym-Magnetabscheiders (37) rückgewonnen werden.

10. Verfahren nach Anspruch 8 oder 9, wobei der zweite (feine) gemahlene Unteranteil zum Abfallstrom aus Schlacken zurückgeführt und mit diesem vermischt wird, bevor mindestens ein Teil davon dem primären Zerkleinerungskreislauf (18) zugeführt wird.

11. Verfahren nach einem der Ansprüche 8 bis 10, wobei derjenige Teil des sekundären zweiten (feinen) Unteranteils, der nach der magnetischen Trennung verbleibt, zum Abfallstrom aus Schlacken zurückgeführt und mit diesem vermischt wird, bevor mindestens ein Teil davon dem primären Zerkleinerungskreislauf (18) zugeführt wird.

12. Verfahren nach einem der vorhergehenden Ansprüche, ferner mit Schritten zur Vorbehandlung (Abschnitt 1) des Abfallstroms, nämlich:
- Sieben (8) des Abfallstroms aus Schlacken zum Bilden einer Vielzahl von Unteranteilen;
- Zuführen mindestens einer der Unteranteile zu dem primären Zerkleinerungskreislauf (18).

13. Verfahren nach Anspruch 12, wobei, bevor der Unteranteil dem primären Zerkleinerungskreislauf (18) zugeführt wird, magnetische Edelstahl enthaltende Wertstoffstücke mit Hilfe eines Magnetabscheiders (9, 14) aus diesem rückgewonnen werden.

14. Verfahren nach Anspruch 12 oder 13, wobei, bevor der Unteranteil dem primären Zerkleinerungskreislauf (18) zugeführt wird, austenitische magnetische Edelstahl enthaltende Wertstoffstücke manuell oder mit Hilfe eines Sensorabscheiders (16) aus diesem rückgewonnen werden.

15. Verfahren nach einem der vorhergehenden Ansprüche, wobei der Abfallstrom aus Schlacken mit FeSO₄ (7) gemischt wird.

16. Verfahren nach einem der vorhergehenden Ansprüche, ferner mit Schritten zur Nachbehandlung (Abschnitt 4) des zweiten (feinen) Unteranteils, nämlich:
- Feinmahlen des zweiten (feinen) Unteranteils unter im Wesentlichen trockenen Bedingungen in einem Mahlkreislauf (51) zum Bilden eines gemahlenen Anteils;
- Sieben (52) des gemahlenen Anteils zum Bilden mindestens eines ersten (groben) und eines zweiten (feinen) gemahlenen Unteranteils;
- Rückgewinnen magnetischer Edelstahl enthaltender Abfallstücke (54) aus dem zweiten (feinen) gemahlenen Unteranteil mit Hilfe eines Magnetabscheiders.

17. Verfahren nach Anspruch 16, wobei magnetische Edelstahl enthaltende Abfallstücke (54) mit Hilfe eines Neodym-Magnetabscheiders (53) aus dem zweiten (feinen) gemahlenen Unteranteil rückgewonnen werden.

18. Verfahren nach Anspruch 16 oder 17, wobei der erste (grobe) gemahlene Unteranteil in den Mahlkreislauf zurückgeführt wird.

19. Verfahren nach Anspruch 18, wobei der zweite (feine) Unteranteil (50) und der erste (grobe) gemahlene Unteranteil (60) wechselweise dem Mahlkreislauf (51) zugeführt werden, und wobei nur dann, wenn dem Mahlkreislauf (51) der erste (grobe) gemahlene Unteranteil (60) zugeführt wird, der erste (grobe) gemahlene Unteranteil, der dann ausgesiebt wird, als Edelstahl enthaltende Abfallstücke (65) abgeführt wird.

20. Vorrichtung zum Durchführen des Verfahrens nach einem der vorhergehenden Ansprüche, umfassend:
- eine Zufuhr zum Bereitstellen eines Abfallstroms aus Schlacken (1), der bei der Herstellung von Edelstahl gebildet wird;
- ein primärer Zerkleinerungskreislauf (18) zum Zerkleinern mindestens eines Teils des Abfallstroms aus Schlacken unter im Wesentlichen trockenen Bedingungen zum Bilden eines primären zerkleinerten Anteils aus Abfallstücken, mit Edelstahl enthaltenden Wertstoffstücken, die aus den Schlacken herausgelöst wurden;
- ein Sieb (19) zum Sieben des primären zerkleinerten Anteils zum Herstellen mindestens eines primären ersten (groben) und eines zweiten (feinen) Unteranteils; und
- einen Abscheider zum Rückgewinnen von Wertstoffstücken aus dem primären ersten (groben) Unteranteil;
**dadurch gekennzeichnet, dass** der Abscheider ein Sensorabscheider (22) ist zum Rückgewinnen Edelstahl enthaltender Wertstoffstücke aus dem primären ersten (groben) Unteranteil, der Sensoren zum Messen einer Dämpfung von Induktivitäten der an ihnen vorbei geführter Abfallstücke und Blasdüsen aufweist, die in Abhängigkeit der von den Sensoren gemessenen Dämpfung von Induktivitäten betätigt werden können, um austenitische Edelstahl enthaltende Wertstoffstücke aus dem primären ersten (groben) Unteranteil, die am Sensorabscheider vorbei geführt wird, heraus zu blasen;
- einen Neodym-Magnetabscheider (22a) zum Rückgewinnen magnetischer Edelstahl enthaltender Schlackestücke aus den Abfallstücken des primären ersten (groben) Unteranteils, die nach der Sensor-Abscheidung verbleiben; und
- eine Rückführung vom Neodym-Magnetabscheider (22a) an den primären Zerkleinerungskreislauf (18), um erneut Edelstahl enthaltende Wertstoffstücke aus den magnetischen Edelstahl enthaltenden Schlackestücken zu lösen.

21. Vorrichtung nach Anspruch 20, umfassend einen Magnetabscheider (20) zum Rückgewinnen magnetischer Edelstahl enthaltender Wertstoffstücke aus dem primären ersten (groben) Unteranteil vor dessen Behandlung durch den Sensorabscheider (22).

22. Vorrichtung nach einem der Ansprüche 20 oder 21, weiter mit einem sekundären Zerkleinerungskreislauf (24).

23. Vorrichtung nach einem der Ansprüche 20 bis 22, weiter mit einem Mahlkreislauf (39).

24. Verwendung einer Vorrichtung nach einem der vorhergehenden Ansprüche zur Rückgewinnung von Edelstahl aus einem Abfallstrom aus Schlacken (1), die bei der Herstellung von Edelstahl in einem Edelstahlwerk gebildet werden.

## Revendications

1. Procédé de récupération d'acier inoxydable à partir d'un flux de résidus d'acier (1) qui se forme durant la production d'acier inoxydable, le procédé comprenant les étapes consistant à :
- concasser au moins une partie du flux de résidus d'acier dans des conditions sensiblement sèches dans un circuit de concassage primaire (18) de façon à former une fraction concassée principale d'éléments résiduels comprenant des éléments mis au rebut contenant de l'acier inoxydable qui ont été dégagés par les résidus ;
- tamiser (19) la fraction concassée principale de façon à produire au moins une première sous-fraction (grossière) et une deuxième sous-fraction (fine) principales ; et
- récupérer des résidus à partir de la première sous-fraction principale (grossière) au moyen d'un séparateur ;
**caractérisé en ce que** des éléments mis au rebut contenant de l'acier inoxydable sont récupérés à partir de la première sous-fraction principale (grossière) au moyen d'un séparateur à détecteur (22), dans lequel le séparateur à détecteur (22) mesure un affaiblissement des inductances des résidus guidés pour passer à son niveau, et le séparateur à détecteur (22) active des buses de soufflage en fonction de l'affaiblissement mesuré des inductances dans le but de souffler des éléments mis au rebut contenant de l'acier inoxydable austénitiques hors de la première sous-fraction principale (grossière) qui est guidée pour passer au niveau du séparateur à détecteur (22), le procédé comprenant par ailleurs les étapes consistant à :
- acheminer les résidus de la première sous-fraction principale (grossière) qui restent après la séparation par détecteur vers un séparateur magnétique dans le but de récupérer des éléments mis au rebut contenant de l'acier inoxydable magnétiques ; et
- renvoyer les éléments mis au rebut contenant de l'acier inoxydable magnétiques récupérés par le séparateur magnétique (22a) vers un circuit de concassage afin que les éléments mis au rebut contenant de l'acier inoxydable soient à nouveau dégagés par rapport à ces résidus.

2. Procédé selon la revendication 1, dans lequel les résidus de la première sous-fraction principale (grossière) qui restent après la séparation par détecteur sont acheminés vers un séparateur magnétique au néodyme (22a) dans le but de récupérer des éléments mis au rebut contenant de l'acier inoxydable magnétiques.

3. Procédé selon l'une quelconque des revendications précédentes, dans lequel les éléments mis au rebut contenant de l'acier inoxydable magnétiques récupérés par le séparateur magnétique (22a) sont renvoyés vers le circuit de concassage primaire (18) afin que les éléments mis au rebut contenant de l'acier inoxydable soient à nouveau dégagés par rapport à ces résidus.

4. Procédé selon l'une quelconque des revendications précédentes, dans lequel, préalablement au traitement de la première sous-fraction principale (grossière) au moyen du séparateur à détecteur (22), des éléments mis au rebut contenant de l'acier inoxydable magnétiques sont récupérés à partir de celle-ci au moyen d'un séparateur magnétique (20).

5. Procédé selon l'une quelconque des revendications précédentes, comprenant également les étapes consistant à :
- concasser la deuxième sous-fraction principale (fine) dans des conditions sensiblement sèches dans un circuit de concassage secondaire (24) de façon à former une fraction concassée secondaire d'éléments résiduels comprenant des éléments mis au rebut contenant de l'acier inoxydable qui ont été dégagés par les résidus ;
- tamiser (25) la fraction concassée secondaire de façon à produire au moins une première sous-fraction (grossière) et une deuxième sous-fraction (fine) secondaires ;
- récupérer des éléments mis au rebut contenant de l'acier inoxydable à partir de la première sous-fraction secondaire (grossière) au moyen d'un séparateur (28).

6. Procédé selon la revendication 5, dans lequel, préalablement au traitement de la première sous-fraction secondaire (grossière) au moyen du deuxième séparateur à détecteur (28), des éléments mis au rebut contenant de l'acier inoxydable magnétiques sont récupérés à partir de celle-ci au moyen d'un deuxième séparateur magnétique (26).

7. Procédé selon la revendication 5 ou 6, comprenant également les étapes consistant à :
- acheminer les résidus de la première sous-fraction secondaire (grossière) qui restent après la séparation par détecteur au moyen du deuxième séparateur à détecteur (28) vers un deuxième séparateur magnétique au néodyme (22a) dans le but de récupérer des éléments mis au rebut contenant de l'acier inoxydable magnétiques ; et
- renvoyer les éléments mis au rebut contenant de l'acier inoxydable magnétiques récupérés par le deuxième séparateur magnétique au néodyme (22a) vers le circuit de concassage secondaire (24) afin que les éléments mis au rebut contenant de l'acier inoxydable soient à nouveau dégagés par rapport à ces résidus.

8. Procédé selon l'une quelconque des revendications précédentes, comprenant également des étapes pour le post-traitement (section 4) de la deuxième sous-fraction (fine), à savoir :
- récupérer des éléments mis au rebut contenant de l'acier inoxydable magnétiques à partir de la deuxième sous-fraction (fine) au moyen d'au moins un séparateur magnétique ;
- broyer finement ces éléments mis au rebut contenant de l'acier inoxydable magnétiques dans des conditions sensiblement sèches dans un circuit de broyage (39) de façon à former une fraction broyée ;
- tamiser (40) la fraction broyée de façon à produire au moins une première sous-fraction (grossière) et une deuxième sous-fraction (fine) broyées.

9. Procédé selon la revendication 8, dans lequel des éléments mis au rebut contenant de l'acier inoxydable magnétiques à partir de la deuxième sous-fraction (fine) sont récupérés au moyen d'au moins un séparateur magnétique au néodyme (37).

10. Procédé selon la revendication 8 ou 9, dans lequel la deuxième sous-fraction (fine) broyée est renvoyée vers, et mélangée au flux de résidus d'acier avant qu'au moins une partie de ce flux ne soit acheminée vers le circuit de concassage primaire (18).

11. Procédé selon l'une quelconque des revendications 8 à 10, dans lequel cette partie de la deuxième sous-fraction (fine) secondaire qui reste après la séparation magnétique, est renvoyée vers, et mélangée au flux de résidus d'acier avant qu'au moins une partie de ce flux ne soit acheminée vers le circuit de concassage primaire (18).

12. Procédé selon l'une quelconque des revendications précédentes, comprenant également des étapes pour le pré-traitement (section 1) du flux de résidus d'acier, à savoir :
- tamiser (8) le flux de résidus d'acier de façon à former une pluralité de sous-fractions ;
- acheminer au moins une des sous-fractions vers le circuit de concassage primaire (18).

13. Procédé selon la revendication 12, dans lequel, préalablement à l'acheminement de la sous-fraction secondaire vers le circuit de concassage primaire (18), des éléments mis au rebut contenant de l'acier inoxydable magnétiques sont récupérés à partir de celle-ci au moyen d'un séparateur magnétique (9, 14).

14. Procédé selon la revendication 12 ou 13, dans lequel, préalablement à l'acheminement de la sous-fraction secondaire vers le circuit de concassage primaire (18), des éléments mis au rebut contenant de l'acier inoxydable austénitiques sont récupérés à partir de celle-ci manuellement ou au moyen d'un séparateur à détecteur (16).

15. Procédé selon l'une quelconque des revendications précédentes, dans lequel le flux de résidus d'acier est mélangé à du FeSO₄ (7).

16. Procédé selon l'une quelconque des revendications précédentes, comprenant également des étapes pour le post-traitement (section 4) de la deuxième sous-fraction (fine), à savoir :
- broyer finement la deuxième sous-fraction (fine) dans des conditions sensiblement sèches dans un circuit de broyage (51) de façon à former une fraction broyée ;
- tamiser (52) la fraction broyée de façon à produire au moins une première sous-fraction (grossière) et une deuxième sous-fraction (fine) broyées ;
- récupérer des éléments mis au rebut contenant de l'acier inoxydable magnétiques (54) à partir de la deuxième sous-fraction (fine) broyée au moyen d'au moins un séparateur magnétique.

17. Procédé selon la revendication 16, dans lequel des éléments mis au rebut contenant de l'acier inoxydable magnétiques (54) sont récupérés à partir de la deuxième sous-fraction (fine) au moyen d'au moins un séparateur magnétique au néodyme (53).

18. Procédé selon la revendication 16 ou 17, dans lequel la première sous-fraction (grossière) broyée est renvoyée vers le circuit de broyage.

19. Procédé selon la revendication 18, dans lequel la deuxième sous-fraction (fine) (50) et la première sous-fraction (grossière) broyées (60) sont acheminées alternativement vers le circuit de broyage (51), et dans lequel uniquement si le circuit de broyage (51) est alimenté avec la première sous-fraction (grossière) broyée (60), seule la première sous-fraction (grossière) broyée qui est alors tamisée est dégagée sous la forme d'éléments mis au rebut contenant de l'acier inoxydable (65).

20. Dispositif adapté pour mettre en oeuvre le procédé selon l'une quelconque des revendications précédentes, le dispositif comprenant :
- un dispositif d'amenée pour fournir un flux de résidus d'acier (1) formé au cours de la production d'acier inoxydable ;
- un circuit de concassage primaire (18) pour concasser au moins une partie du flux de résidus d'acier dans des conditions sensiblement sèches de façon à former une fraction concassée principale d'éléments résiduels comprenant des éléments mis au rebut contenant de l'acier inoxydable qui ont été dégagés par les résidus ;
- un tamis (19) pour tamiser la fraction concassée principale de façon à former au moins une première sous-fraction (grossière) et une deuxième sous-fraction (fine) principales ; et
- un séparateur pour récupérer des résidus à partir de la première sous-fraction (grossière) principale ;
**caractérisé en ce que** le séparateur est un séparateur à détecteur (22) pour récupérer des éléments mis au rebut contenant de l'acier inoxydable à partir de la première sous-fraction (grossière) principale, comprenant des détecteurs pour mesurer un affaiblissement des inductances de résidus guidés pour passer à leur niveau, et des buses de soufflage qui peuvent être actionnées en fonction de l'affaiblissement des inductances mesurées par les détecteurs de façon à souffler des éléments mis au rebut contenant de l'acier inoxydable austénitiques hors de la première sous-fraction (grossière) principale qui sont guidées pour passer au niveau du séparateur à détecteur ;
- un séparateur magnétique au néodyme (22a) pour récupérer des éléments mis au rebut contenant de l'acier inoxydable magnétiques à partir des résidus de la première sous-fraction (grossière) principale qui restent après la séparation à détecteur ; et
- un retour à partir du séparateur magnétique au néodyme (22a) vers le circuit de concassage principal (18) pour dégager des éléments mis au rebut contenant de l'acier inoxydable à nouveau à partir des éléments mis au rebut contenant de l'acier inoxydable magnétiques.

21. Dispositif selon la revendication 20, comprenant un séparateur magnétique (20) pour récupérer des éléments mis au rebut contenant de l'acier inoxydable magnétique à partir de la première sous-fraction (grossière) principale préalablement au traitement de cette dernière par le séparateur à détecteur (22).

22. Dispositif selon l'une quelconque des revendications 20 à 21, comprenant également un circuit de concassage secondaire (24).

23. Dispositif selon l'une quelconque des revendications 20 à 22, comprenant également un circuit de broyage (39).

24. Utilisation du dispositif selon l'une quelconque des revendications précédentes pour récupérer de la si inoxydable à partir d'un flux de résidus d'acier (1) formé au cours de la production d'acier inoxydable dans une usine métallurgique de fabrication d'acier inoxydable.
